(19)

Europäisches
Patentamt
European
Patent Office
Office européen
des brevets

(11) **EP 4 715 844 A1**

(12) **EUROPEAN PATENT APPLICATION**
published in accordance with Art. 153(4) EPC

(43) Date of publication:
**25.03.2026 Bulletin 2026/13**

(21) Application number: **24859217.2**

(22) Date of filing: **18.07.2024**

(51) International Patent Classification (IPC):
*H01B 1/06* [(2006.01)]   *C01B 17/20* [(2006.01)]
*C01B 19/00* [(2006.01)]   *H01M 10/052* [(2010.01)]
*H01M 10/0562* [(2010.01)]

(52) Cooperative Patent Classification (CPC):
**C01B 17/20; C01B 19/00; H01B 1/06;**
**H01M 10/052; H01M 10/0562;** Y02E 60/10

(86) International application number:
**PCT/JP2024/025849**

(87) International publication number:
**WO 2025/047173 (06.03.2025 Gazette 2025/10)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **01.09.2023 JP 2023142423**

(71) Applicant: **Murata Manufacturing Co., Ltd.**
**Nagaokakyo-shi, Kyoto 617-8555 (JP)**

(72) Inventors:
• **MORINO, Yusuke**
  **Nagaokakyo-shi, Kyoto 617-8555 (JP)**
• **KINOSHITA, Mayu**
  **Nagaokakyo-shi, Kyoto 617-8555 (JP)**
• **ITO, Daisuke**
  **Nagaokakyo-shi, Kyoto 617-8555 (JP)**

(74) Representative: **Reddie & Grose LLP**
**The White Chapel Building**
**10 Whitechapel High Street**
**London E1 8QS (GB)**

(54) **SOLID ELECTROLYTE, POSITIVE ELECTRODE, AND SOLID-STATE BATTERY**

(57)    A solid electrolyte includes: a first crystallite formed in a primary particle and having a first crystal structure; a second crystallite formed in the same primary particle as for the first crystallite and having a second crystal structure that is a crystal structure different from the first crystal structure; and an amorphous phase, the first crystallite and the second crystallite each contain lithium, the first crystal structure is a hexagonal crystal, the second crystal structure is an orthorhombic crystal, and the crystallite size of the first crystallite and the crystallite size of the second crystallite are both 50 nm or less.

FIG. 2

EP 4 715 844 A1

**Description**

TECHNICAL FIELD

The present invention relates to a solid electrolyte, a positive electrode, and a solid-state battery.

BACKGROUND ART

Patent Document 1, Patent Document 2, and Non-Patent Document 1 each disclose a solid-state battery in which a solid electrolyte is used instead of an organic solvent electrolytic solution.

PRIOR ART DOCUMENTS

PATENT DOCUMENTS

Patent Document 1: Japanese Patent Application Laid-Open No. 2022-139139
Patent Document 2: Japanese Patent Application Laid-Open No. 2015-069696

NON-PATENT DOCUMENT

Non Patent Document 1: Misae Otoyama, Kentaro Kuratani, Hironori Kobayashi, "A systematic study on structure, ionic conductivity, and air-stability of xLi4SnS4·(1-x)Li3PS4 solid electrolytes" Ceramics International, 47 (2021) 28377-28383.

SUMMARY OF THE INVENTION

Problem to be solved by the invention

In a solid-state battery in which such a solid electrolyte is used, the ionic conductivity of the solid electrolyte is required to be improved.
An object of the present invention is to provide a solid electrolyte, a positive electrode, and a solid-state battery capable of improving ionic conductivity.

Means for solving the problem

A solid electrolyte according to an aspect includes: a first crystallite formed in a primary particle and having a first crystal structure; a second crystallite formed in the same primary particle as for the first crystallite and having a second crystal structure that is a crystal structure different from the first crystal structure; and an amorphous phase, the first crystallite and the second crystallite each contain lithium, the first crystal structure is a hexagonal crystal, the second crystal structure is an orthorhombic crystal, and the crystallite size of the first crystallite and the crystallite size of the second crystallite are both 50 nm or less.
A positive electrode according to an aspect includes a positive electrode active material layer provided in contact with the solid electrolyte mentioned above.
A solid-state battery according to an aspect includes the solid electrolyte mentioned above, and a positive electrode and a negative electrode provided in contact with the solid electrolyte.

Advantageous effect of the invention

The solid electrolyte, positive electrode, and solid-state battery according to the present invention can improve the ionic conductivity.

BRIEF EXPLANATION OF DRAWINGS

FIG. 1 is a sectional view schematically illustrating the configuration of a solid-state battery according to an embodiment.

FIG. 2 is an explanatory view for describing the configuration of a solid electrolyte.

FIG. 3 is a table showing the configurations and ionic conductivities of solid electrolytes according to examples and comparative examples.

FIG. 4 is a graph showing results of ionic conductivity measurement according to Examples and Comparative Examples.

MODE FOR CARRYING OUT THE INVENTION

Hereinafter, an embodiment of the present disclosure will be described. It is to be noted that the present disclosure is not limited by the embodiment.

(Embodiment)

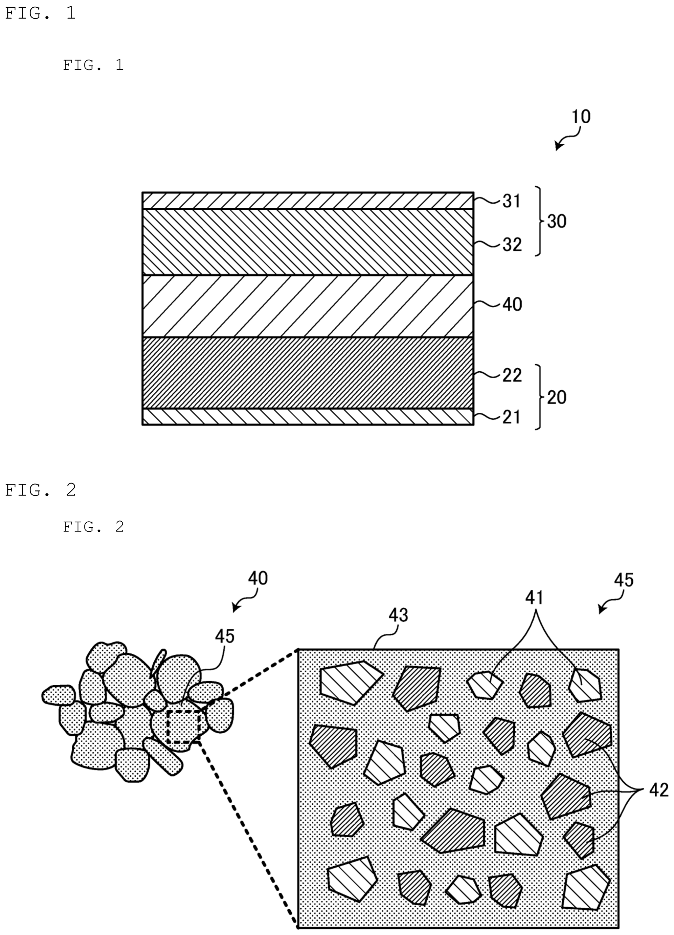

FIG. 1 is a sectional view schematically illustrating the configuration of a solid-state battery according to an embodiment. FIG. 2 is an explanatory view for describing the configuration of a solid electrolyte. As shown in FIG. 1, a solid-state battery 10 according to an embodiment includes a positive electrode 20, a negative electrode 30, and a solid electrolyte 40. The positive electrode 20 and the negative electrode 30 are laminated with the solid electrolyte 40 interposed therebetween. The solid-state battery 10 according to the embodiment is a secondary battery that can be repeatedly charged and discharged, and more specifically, is a lithium ion secondary battery.

The positive electrode 20 includes a positive electrode current collector 21 and a positive electrode active material layer 22 provided on one surface (upper surface) of the positive electrode current collector 21. The positive electrode current collector 21 of the positive electrode 20 is formed of a conductive material such as aluminum (Al). The positive electrode current collector 21 is not limited to aluminum, and may be another conductive material such as nickel or stainless steel.

The positive electrode active material layer 22 is a layer including positive electrode active material particles. The positive electrode active material layer 22 is provided in contact with the solid electrolyte 40. The positive electrode active material is a positive electrode material capable of occluding and releasing lithium ions, and for example, a lithium-containing composite oxide is used. As the lithium-containing composite oxide, for example, a lithium cobaltate, a lithium nickelate, a lithium manganate, a lithium iron phosphate, or the like is used. Alternatively, some of the transition metals contained in these materials may be replaced with another metal.

The positive electrode active material layer 22 may contain a conductive agent and a binder, if necessary. For the conductive agent contained in the positive electrode active material layer 22, for example, a carbon material such as carbon black is used. The conductive agent is not limited to one type, and multiple conductive materials may be used in mixture. It is to be noted that the conductive agent may be any metal material, conductive polymer, or the like, as long as the conductive agent is a conductive material.

For the binder contained in the positive electrode active material layer 22, for example, a polyvinylidene fluoride (PVDF) is used. However, the binder is not limited to the foregoing, and only needs to be a compound containing any one type, or two or more types of synthetic rubbers, polymer compounds, and the like. Examples of the synthetic rubbers include a styrene-butadiene-based rubber, a fluorine-based rubber, and an ethylene propylene diene. Examples of the polymer compounds include a polyvinylidene fluoride, a polyimide, and a carboxymethyl cellulose.

The positive electrode active material layer 22 may have a configuration containing no binder or conductive aid, and also including substantially no voids.

The negative electrode 30 includes a negative electrode current collector 31 and a negative electrode active material layer 32 provided on one surface (lower surface) of the negative electrode current collector 31.

The negative electrode current collector 31 of the negative electrode 30 is formed of a conductive material such as copper (Cu). The negative electrode current collector 31 is not limited to copper, and may be another conductive material such as nickel or stainless steel.

The negative electrode active material layer 32 of the negative electrode 30 contains a negative electrode active material and a binder. The negative electrode active material layer 32 is provided in contact with the solid electrolyte 40. The negative electrode active material contains, for example, a carbon material such as graphite, a silicon compound $(SiO_x)$, or the like. More specifically, the carbon material for use in the negative electrode active material is, for example, at least one or more of easily graphitizable carbon, non-graphitizable carbon, and graphite (natural graphite and artificial graphite). The carbon material for use in the negative electrode active material undergoes a significantly small change in crystal structure at the time of occluding and releasing lithium ions, thus providing a high energy density and great cycle characteristics.

For the binder contained in the negative electrode active material layer 32, the same material as the binder contained in the positive electrode active material layer 22 described above, for example, a polyvinylidene fluoride (PVDF) is used. However, the binder contained in the negative electrode active material layer 32 may be the same material as or a different material from the binder contained in the positive electrode active material layer 22.

The solid electrolyte 40 is provided between the positive electrode 20 and the negative electrode 30. The solid electrolyte 40 has one surface (upper surface) in contact with the negative electrode 30 (negative electrode active material layer 32), and the other surface (lower surface) in contact with the positive electrode 20 (positive electrode active material layer 22). The solid electrolyte 40 is a sintered body formed by making the solid electrolyte sintered. The material of the solid electrolyte is formed of a material in which ions can move between the positive electrode 20 and the negative electrode 30. The material of the solid electrolyte has a composition represented by the following formula (1).

$$Li_a M X_b \qquad (1)$$

In the formula (1), $3 < a < 5$ and $3 < b < 5$ are satisfied. M contains at least one of silicon (Si), antimony (Sb), aluminum (Al), tin (Sn), and lead (Pb). X contains at least one of sulfur (S) and selenium (Se).

As shown by the left diagram of FIG. 2, fine primary particles 45 are aggregated to form secondary particles in the solid electrolyte 40. In the present embodiment, the average particle size of the primary particles 45 is, for example, 2 $\mu$m or less. In addition, the average particle size of the secondary particles is, for example, 0.5 $\mu$m or more and 30 $\mu$m or less.

As shown by the right diagram of FIG. 2, the solid electrolyte 40 includes first crystallites 41, second crystallites 42, and an amorphous phase 43 formed in the same primary particle 45. The first crystallites 41, the second crystallites 42, and the amorphous phase 43 each contain lithium. More specifically, the first crystallites 41, the second crystallites 42, and the amorphous phase 43 have a composition represented by the above formula (1).

The crystallite sizes (grain sizes) of the first crystallites 41 and the second crystallites 42 are all 50 nm or less. The first crystal structure of the first crystallite 41 is different from the second crystal structure of the second crystallite 42. For example, the first crystal structure of the first crystallite 41 is a hexagonal crystal, and the second crystal structure of the second crystallite 42 is an orthorhombic crystal. The region between the first crystallites 41 and the second crystallites 42, that is, the region where no crystal structure is formed in the primary particle 45 is the amorphous phase 43.

As described above, in the solid electrolyte 40 according to the present embodiment, nanocrystals that have at least two types of crystal structures (first crystallites 41 and the second crystallites 42) are formed in the same primary particle, thus increasing the interface for each of the first crystallites 41 and the second crystallites 42, and allowing the ionic conductivity of the solid electrolyte 40 to be improved.

It is to be noted that FIG. 2 is merely intended to be schematic, and the numbers, shapes, arrangements, and the like of the first crystallites 41 and second crystallites 42 can be appropriately changed. For example, the first crystallites 41 and the second crystallites 42 are separated from each other in FIG. 2, but the present invention is not limited thereto, and the first crystallites 41 and the second crystallites 42 may be partially in contact with each other. However, in the case of the first crystallites 41 in contact with each other, the adjacent first crystallites 41 are defined as separate crystallites when a grain boundary is present between the adjacent first crystallites 41, or when the adjacent first crystallites 41 are different in orientation from each other. The same applies to the case of the second crystallites 42 in contact with each other. In addition, crystallites that have three or more different crystal structures may be formed in the same primary particle 45.

(Examples)

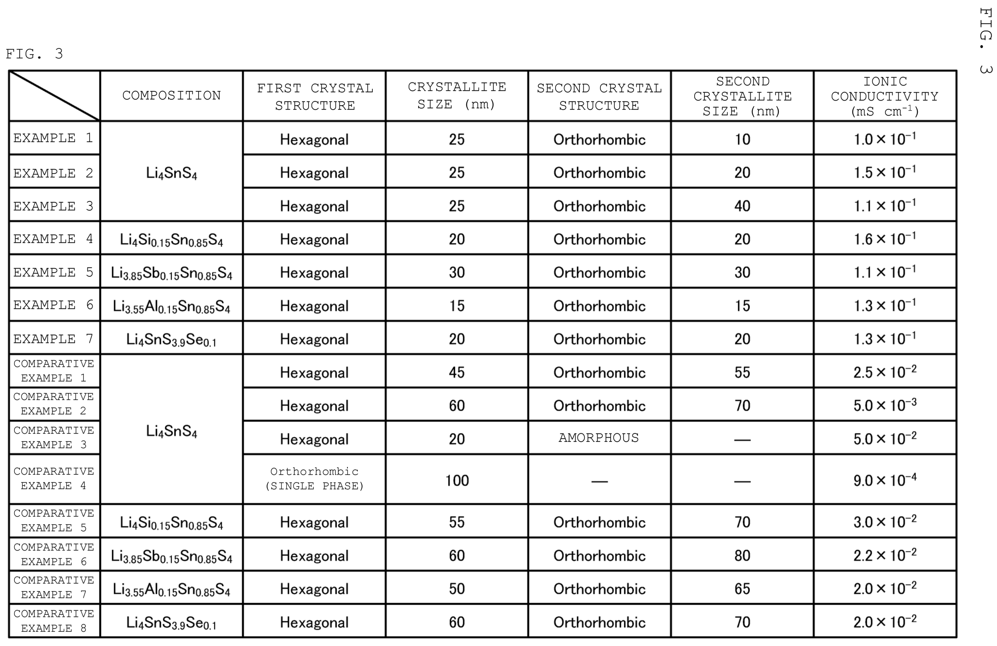

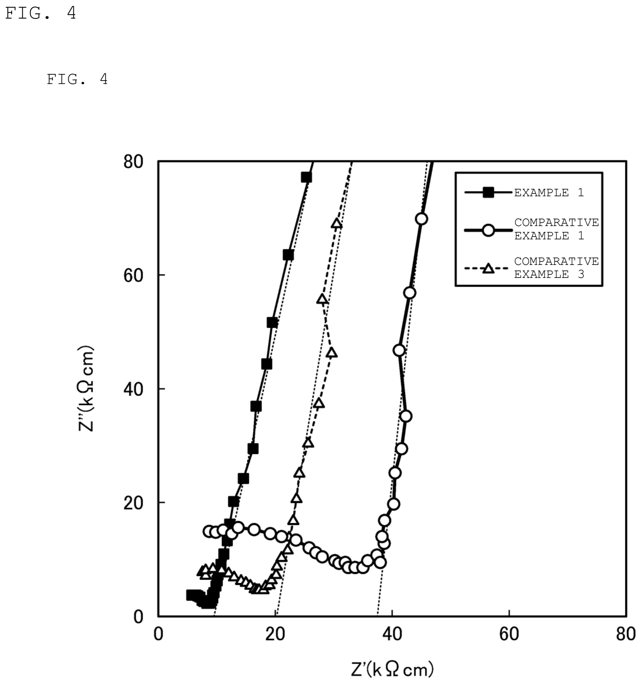

FIG. 3 is a table showing the configurations and ionic conductivities of solid electrolytes according to examples and comparative examples. FIG. 4 is a graph showing results of ionic conductivity measurement according to Examples and Comparative Examples. It is to be noted that the present invention is not limited by the examples.

(Example 1)

The solid electrolyte according to Example 1 was prepared by the following method. First, raw material reagents of $Li_2S$, Sn, and S are weighed in an inert gas such that $Li_2S : Sn : S$ is $2 : 1 : 2$ in molar ratio. $H_2O$ is injected such that the total amount (g) of $Li_2S$, Sn, and S is 15 wt% in terms of solution concentration, and then the mixture is heated and stirred at 80°C for 24 hours to form a solution (step 1).

Next, it is confirmed that $Li_2S$, Sn, and S are dissolved, and the obtained solution is vacuum-dried at 120°C. Thus, a powder is obtained (step 2).

The obtained powder was heated at a heating rate of 10°C/min in an inert gas, and then heat-treated at 250°C for 3 hours to obtain a solid electrolyte powder (step 3).

(Measurement of Ionic Conductivity)

With the use of a 10 mm$\varphi$ ceramic insulating cylinder, 100 mg of the obtained solid electrolyte was subjected to pressing at 294 MPa at room temperature, and then, electrochemical impedance spectra at an amplitude of 10 mV and a frequency of $10^6$ to 10 Hz were measured with the solid electrolyte restrained at 98 MPa. The ionic conductivity was calculated from the resistance value obtained from the spectrum and the pellet thickness.

The graph shown in FIG. 4 shows electrochemical impedance spectra of solid electrolytes, where the horizontal axis represents a real component Z' of impedance Z, whereas the horizontal axis represents an imaginary component Z" of the impedance Z. FIG. 4 shows the electrochemical impedance spectra of the solid electrolyte according to Example 1, and for comparison, also shows electrochemical impedance spectra according to Comparative Examples 1 and 3 together.

As shown in FIG. 4, the imaginary axis (capacitance) components of the electrochemical impedance spectra are linearly extrapolated to calculate the resistivity (Z' ($k\Omega cm$)) for each of the solid electrolytes. The reciprocal of the calculated resistivity corresponds to the ionic conductivity ($mScm^{-1}$).

(Calculation of Crystallite Size)

A diffraction pattern derived from the solid electrolyte was obtained by high-luminance X-ray diffraction measurement (XRD), and the crystallite size was calculated by using the Scherrer method. Specifically, the crystallite size D was calculated based on the following formulas (2) and (3).

$$D = K \times \lambda/(\beta \times \cos\theta) \qquad (2)$$

$$\beta = (B\ (sample)^2 - B\ (ref)^2)^{1/2} \qquad (3)$$

In the formulas (2) and (3), D represents a crystallite size, K represents a Scherrer constant, $\lambda$ represents an incident light wavelength, $\beta$ represents a spread of diffracted X-rays derived from a target crystallite, B (sample) represents a spread of diffracted X-rays from a sample, B (ref) represents a spread of diffracted X-rays from a reference substance, and $\theta$ represents a Bragg angle.

In the calculation of the crystallite size in the examples and the comparative examples, a quartz glass capillary of 0.3 mm$\varphi$ in inner diameter was filled with each of the solid electrolyte powders to hermetically sample the solid electrolyte powder in an inert gas, and the solid electrolyte was subjected to XRD measurement in BL5S2 from Aichi Synchrotron Light Center. Incident light of 15.5 keV was used.

The B (sample) for each of the first crystallite and second crystallite was calculated by the following method. For the first crystallite, the background is removed by connecting both ends with respect to a 103 peak of the solid electrolyte (Hexagonal). Then, from the peak width at the 1/2 intensity between the peak bottom and top, the B (sample) of the first crystallite was calculated by using the "Scherrer method". For the second crystallite, the background is removed by connecting both ends with respect to a 222 peak of the solid electrolyte (Orthorhombic). Then, from the peak width at the 1/2 intensity between the peak bottom and top, the B (sample) of the second crystallite was calculated by using the "Scherrer method".

For the B (ref), a value of lanthanum hexaboride LaB$_6$ was used. For analysis of the 103 peak of the solid electrolyte, a straight line passing through two points of the 210 peak 0.0357 ($2\theta = 24.8697°$) and 211 peak 0.0361 ($2\theta = 27.2881°$) of LaB$_6$ was calculated, and the value of the B (ref) at the corresponding peak position was calculated. For analysis of the 222 peak of the solid electrolyte, a straight line passing through two points of the 111 peak 0.0367 ($2\theta = 19.2013°$) and 200 peak 0.0360 ($2\theta = 22.2090°$) of LaB$_6$ was calculated, and the value of the B (ref) at corresponding the peak position was calculated.

(Example 2)

Example 2 is different from Example 1 described above in the conditions for the heat treatment in step 3. Specifically, in Example 2, a heat treatment at 275°C for 3 hours was performed to obtain a solid electrolyte powder. The other conditions for preparing and methods for evaluating the solid electrolyte are the same as those in Example 1.

(Example 3)

Example 3 is different from Example 1 described above in the conditions for the heat treatment in step 3. Specifically, in Example 3, a heat treatment at 300°C for 3 hours was performed to obtain a solid electrolyte powder. The other conditions for preparing and methods for evaluating the solid electrolyte are the same as those in Example 1.

(Example 4)

Example 4 is different from Example 1 described above in the conditions for blending raw material reagents in step 1 and the conditions for the heat treatment in step 3. Specifically, raw material reagents of $Li_2S$, Sn, Si, and S are weighed in an inert gas such that $Li_2S$ : Sn : Si : S is 2 : 0.85 : 0.15 : 2 in molar ratio. Then, in Example 4, a heat treatment at 275°C for 3 hours was performed to obtain a solid electrolyte powder. The other conditions for preparing and methods for evaluating the solid electrolyte are the same as those in Example 1.

(Example 5)

Example 5 is different from Example 4 described above in the conditions for blending raw material reagents in step 1. Specifically, raw material reagents of $Li_2S$, Sn, Sb, and S are weighed in an inert gas such that $Li_2S$ : Sn : Sb : S is 1.925 : 0.85 : 0.15 : 2.075 in molar ratio. The other heat treatment conditions, and conditions for preparing and methods for evaluating the solid electrolyte are the same as those in Example 4.

(Example 6)

Example 6 is different from Example 4 described above in the conditions for blending raw material reagents in step 1. Specifically, raw material reagents of $Li_2S$, Sn, Al, and S are weighed in an inert gas such that $Li_2S$ : Sn : Al : S is 1.775 : 0.85 : 0.15 : 2.225 in molar ratio. The other heat treatment conditions, and conditions for preparing and methods for evaluating the solid electrolyte are the same as those in Example 4.

(Example 7)

Example 7 is different from Example 4 described above in the conditions for blending raw material reagents in step 1. Specifically, raw material reagents of $Li_2S$, Sn, S, and Se are weighed in an inert gas such that $Li_2S$ : Sn : S : Se is 2 : 1 : 1.9 : 0.1 in molar ratio. The other heat treatment conditions, and conditions for preparing and methods for evaluating the solid electrolyte are the same as those in Example 4.

(Comparative Examples)

Comparative Examples 1 to 4 are different from Example 1 described above in the conditions for the heat treatment in step 3. Specifically, in Comparative Example 1, a heat treatment at 350°C for 3 hours was performed to obtain a solid electrolyte powder. In Comparative Example 2, a heat treatment at 400°C for 3 hours was performed to obtain a solid electrolyte powder. In Comparative Example 3, a heat treatment at 200°C for 3 hours was performed to obtain a solid electrolyte powder. In Comparative Example 4, a heat treatment at 500°C for 3 hours was performed to obtain a solid electrolyte powder. The other conditions for preparing and methods for evaluating the solid electrolyte are the same as those in Example 1.

Comparative Examples 5 to 8 are different from Examples 4 to 7 described above in the conditions for the heat treatment in step 3. Specifically, in Comparative Examples 5 to 8, a heat treatment at 400°C for 3 hours was performed to obtain solid electrolyte powders. The other conditions for preparing and methods for evaluating the solid electrolyte are the same as those in Examples 4 to 7.

As shown in the table of FIG. 3, the compositions of the solid electrolytes according to Examples 1 to 3 are represented by $Li_4SnS_4$. More specifically, in the formula (1) described above, M is tin (Sn), and X is sulfur (S). The composition of the solid electrolyte according to Example 4 is represented by $Li_4Si_{0.15}Sn_{0.85}S_4$. More specifically, in the formula (1) described above, M is silicon (Si) and tin (Sn), and X is sulfur (S).

The composition of the solid electrolyte according to Example 5 is represented by $Li_{3.85}Sb_{0.15}Sn_{0.85}S_4$. More specifically, in the formula (1) described above, M is antimony (Sb) and tin (Sn), and X is sulfur (S). The composition of the solid electrolyte according to Example 6 is represented by $Li_{3.55}Al_{0.15}Sn_{0.85}S_4$. More specifically, in the formula (1) described above, M is aluminum (Al) and tin (Sn), and X is sulfur (S). The composition of the solid electrolyte according to Example 7 is represented by $Li_4SnS_{3.9}Se_{0.1}$. More specifically, in the formula (1) described above, M is tin (Sn), and X is sulfur (S) and selenium (Se).

Examples 1 to 7 each have a first crystallite that has a first crystal structure (Hexagonal) and a second crystallite that has a second crystal structure (Orthorhombic). In addition, the crystallite size (first crystallite size) of the first crystallite and the crystallite size (second crystallite size) of the second crystallite are both 50 nm or less. More preferably, the crystallite size of the first crystallite and the crystallite size of the second crystallite are both 10 nm or more and 40 nm or less.

The compositions of the solid electrolytes according to Comparative Examples 1 to 4 are $Li_4SnS_4$, which is the

same as those of Examples 1 to 3. The composition of the solid electrolyte according to Comparative Example 5 is $Li_4Si_{0.5}Sn_{0.5}S_4$, which is the same as that of Example 4. The composition of the solid electrolyte according to Comparative Example 6 is $Li_{3.85}Sb_{0.15}Sn_{0.85}S_4$, which is the same as that of Example 5. The composition of the solid electrolyte according to Comparative Example 7 is $Li_{3.55}Al_{0.15}Sn_{0.85}S_4$, which is the same as that of Example 6. The composition of the solid electrolyte of Comparative Example 8 is $Li_4SnS_{3.9}Se_{0.1}$, which is the same as that of Example 7.

However, while Comparative Examples 1 and 2 and Comparative Examples 5 to 8 are the same as the examples in the configuration including the first crystallite that has the first crystal structure (Hexagonal) and the second crystallite that has the second crystal structure (Orthorhombic), at least one of the first crystallite and the second crystallite is larger than 50 nm in crystallite size. More specifically, in Comparative Example 1, the crystallite size of the second crystallite is 55 nm, and at least the crystallite size of the second crystallite is larger than 50 nm. In Comparative Example 2, the crystallite size of the first crystallite is 60 nm, the crystallite size of the second crystallite is 70 nm, and both the first crystallite size and the second crystallite size are larger than 50 nm. Also in Comparative Examples 5 to 8, both the first crystallite size and the second crystallite size are larger than 50 nm.

In Comparative Example 3, the first crystallite that has the first crystal structure (Hexagonal) is formed, and the second crystal structure is amorphous. In Comparative Example 4, only the first crystallite that has the first crystal structure (Orthorhombic) is formed, and the second crystallite that has the second crystal structure is not formed.

The ionic conductivity in Examples 1 to 7 is $1.0 \times 10^{-1}$ or more and $1.6 \times 10^{-1}$ or less. In contrast, the ionic conductivity in Comparative Examples 1 to 8 is $9.0 \times 10^{-4}$ or more and $5.0 \times 10^{-2}$ or less. Accordingly, it has been demonstrated that the solid electrolytes according to Examples 1 to 7 have a better ionic conductivity than those according to the comparative examples.

As described above, it has been demonstrated that, the solid electrolytes according to the examples have, with the crystallite size of the first crystallite and the crystallite size of the second crystallite both controlled to be 50 nm or less, a better ionic conductivity than the solid electrolytes according to the comparative examples.

In addition, the solid electrolytes according to the examples contain no LiPS-based solid electrolyte, which is a material with low water resistance, shown in Patent Documents 1 and 2 and Non-Patent Document 1, thus allowing the ionic conductivity to be improved while ensuring water resistance.

In addition, the solid electrolytes according to the examples can be synthesized by a liquid phase method, thus allowing the productivity to be improved as compared with a step of mechanically mixing and grinding with a mechanical milling treatment such as a ball mill.

While Examples 1 to 7 respectively have, as the composition of the solid electrolyte, $Li_4SnS_4$, $Li_4Si_{0.15}Sn_{0.85}S_4$, $Li_{3.85}Sb_{0.15}Sn_{0.85}S_4$, $Li_{3.55}Al_{0.15}Sn_{0.85}S_4$, and $Li_4SnS_{3.9}Se_{0.1}$ shown, the composition is not limited thereto. Similarly, in the case of the other compositions represented by the formula (1) described above, controlling both the crystallite size of the first crystallite and the crystallite size of the second crystallite to be 50 nm or less allows the ionic conductivity to be improved.

It is to be noted that the embodiment described above is intended to facilitate understanding of the present invention, but not intended to construe the present invention in any limited way. The present invention can be modified or improved without departing from the gist of the present invention, and the present invention includes equivalents thereof.

Further, the present disclosure can employ the following configurations:

(1) A solid electrolyte including:

a first crystallite formed in a primary particle and having a first crystal structure;
a second crystallite formed in the same primary particle as for the first crystallite and having a second crystal structure that is a crystal structure different from the first crystal structure; and
an amorphous phase,
in which the first crystallite and the second crystallite each contain lithium, and
the first crystal structure is a hexagonal crystal, and the second crystal structure is an orthorhombic crystal, and
the crystallite size of the first crystallite and the crystallite size of the second crystallite are both 50 nm or less.

(2) The solid electrolyte according to (1),

having a composition represented by the following formula (1):

$$Li_aMX_b \qquad (1)$$

in the formula (1), $3 < a < 5$ and $3 < b < 5$ are satisfied,
M contains at least one of silicon (Si), antimony (Sb), aluminum (Al), tin (Sn), and lead (Pb), and
X contains at least one of sulfur (S) and selenium (Se).

EP 4 715 844 A1

(3) The solid electrolyte according to (1) or (2),
in which the primary particles have an average particle size of 2 μm or less.
(4) A positive electrode including
a positive electrode active material layer provided in contact with the solid electrolyte according to any one of (1) to (3).
(5) A solid-state battery including:

the solid electrolyte according to any one of (1) to (3); and
a positive electrode and a negative electrode provided in contact with the solid electrolyte.

DESCRIPTION OF REFERENCE SYMBOLS

10: Solid-state battery
20: Positive electrode
21: Positive electrode current collector
22: Positive electrode active material layer
30: Negative electrode
31: Negative electrode current collector
32: Negative electrode active material layer
40: Solid electrolyte
41: First crystallite
42: Second crystallite
43: Amorphous phase
45: Primary particle

**Claims**

1. A solid electrolyte comprising:

   a first crystallite formed in a primary particle and having a first crystal structure;
   a second crystallite formed in the same primary particle as for the first crystallite and having a second crystal structure that is a crystal structure different from the first crystal structure; and
   an amorphous phase,
   wherein the first crystallite and the second crystallite each contain lithium, and
   the first crystal structure is a hexagonal crystal, and the second crystal structure is an orthorhombic crystal, and
   a crystallite size of the first crystallite and a crystallite size of the second crystallite are both 50 nm or less.

2. The solid electrolyte according to claim 1,

   having a composition represented by the following formula (1):

   $$Li_aMX_b \qquad (1)$$

   in the formula (1), $3 < a < 5$ and $3 < b < 5$ are satisfied,
   M contains at least one of silicon (Si), antimony (Sb), aluminum (Al), tin (Sn), and lead (Pb), and
   X contains at least one of sulfur (S) and selenium (Se).

3. The solid electrolyte according to claim 1 or 2,
   wherein the primary particles have an average particle size of 2 μm or less.

4. A positive electrode comprising
   a positive electrode active material layer provided in contact with the solid electrolyte according to any one of claims 1 to 3.

5. A solid-state battery comprising:

   the solid electrolyte according to any one of claims 1 to 3; and

8

a positive electrode and a negative electrode provided in contact with the solid electrolyte.

FIG. 1

FIG. 1

FIG. 2

FIG. 2

FIG. 3

| | COMPOSITION | FIRST CRYSTAL STRUCTURE | CRYSTALLITE SIZE (nm) | SECOND CRYSTAL STRUCTURE | SECOND CRYSTALLITE SIZE (nm) | IONIC CONDUCTIVITY (mS cm$^{-1}$) |
|---|---|---|---|---|---|---|
| EXAMPLE 1 | $Li_4SnS_4$ | Hexagonal | 25 | Orthorhombic | 10 | $1.0 \times 10^{-1}$ |
| EXAMPLE 2 | $Li_4SnS_4$ | Hexagonal | 25 | Orthorhombic | 20 | $1.5 \times 10^{-1}$ |
| EXAMPLE 3 | $Li_4SnS_4$ | Hexagonal | 25 | Orthorhombic | 40 | $1.1 \times 10^{-1}$ |
| EXAMPLE 4 | $Li_4Si_{0.15}Sn_{0.85}S_4$ | Hexagonal | 20 | Orthorhombic | 20 | $1.6 \times 10^{-1}$ |
| EXAMPLE 5 | $Li_{3.85}Sb_{0.15}Sn_{0.85}S_4$ | Hexagonal | 30 | Orthorhombic | 30 | $1.1 \times 10^{-1}$ |
| EXAMPLE 6 | $Li_{3.55}Al_{0.15}Sn_{0.85}S_4$ | Hexagonal | 15 | Orthorhombic | 15 | $1.3 \times 10^{-1}$ |
| EXAMPLE 7 | $Li_4SnS_{3.9}Se_{0.1}$ | Hexagonal | 20 | Orthorhombic | 20 | $1.3 \times 10^{-1}$ |
| COMPARATIVE EXAMPLE 1 | $Li_4SnS_4$ | Hexagonal | 45 | Orthorhombic | 55 | $2.5 \times 10^{-2}$ |
| COMPARATIVE EXAMPLE 2 | $Li_4SnS_4$ | Hexagonal | 60 | Orthorhombic | 70 | $5.0 \times 10^{-3}$ |
| COMPARATIVE EXAMPLE 3 | $Li_4SnS_4$ | Hexagonal | 20 | AMORPHOUS | — | $5.0 \times 10^{-2}$ |
| COMPARATIVE EXAMPLE 4 | $Li_4SnS_4$ | Orthorhombic (SINGLE PHASE) | 100 | — | — | $9.0 \times 10^{-4}$ |
| COMPARATIVE EXAMPLE 5 | $Li_4Si_{0.15}Sn_{0.85}S_4$ | Hexagonal | 55 | Orthorhombic | 70 | $3.0 \times 10^{-2}$ |
| COMPARATIVE EXAMPLE 6 | $Li_{3.85}Sb_{0.15}Sn_{0.85}S_4$ | Hexagonal | 60 | Orthorhombic | 80 | $2.2 \times 10^{-2}$ |
| COMPARATIVE EXAMPLE 7 | $Li_{3.55}Al_{0.15}Sn_{0.85}S_4$ | Hexagonal | 50 | Orthorhombic | 65 | $2.0 \times 10^{-2}$ |
| COMPARATIVE EXAMPLE 8 | $Li_4SnS_{3.9}Se_{0.1}$ | Hexagonal | 60 | Orthorhombic | 70 | $2.0 \times 10^{-2}$ |

FIG. 4

FIG. 4

## INTERNATIONAL SEARCH REPORT

| | International application No. |
|---|---|
| | **PCT/JP2024/025849** |

**A. CLASSIFICATION OF SUBJECT MATTER**

*H01B 1/06*(2006.01)i; *C01B 17/20*(2006.01)i; *C01B 19/00*(2006.01)i; *H01M 10/052*(2010.01)i; *H01M 10/0562*(2010.01)i
FI:  H01B1/06 A; H01M10/0562; H01M10/052; C01B17/20; C01B19/00 Z

According to International Patent Classification (IPC) or to both national classification and IPC

**B. FIELDS SEARCHED**

Minimum documentation searched (classification system followed by classification symbols)

H01B1/06; C01B17/20; C01B19/00; H01M10/052; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-139139 A (NATIONAL INSTITUTE OF ADVANCED INDUSTRIAL SCIENCE AND TECHNOLOGY) 26 September 2022 (2022-09-26) paragraphs [0059]-[0066], [0081], [0082], [0090]-[0099] | 1, 3-5 |
| A | | 2 |
| A | WO 2017/155119 A1 (TOKYO INSTITUTE OF TECHNOLOGY) 14 September 2017 (2017-09-14) entire text, all drawings | 1-5 |
| A | WO 2022/215520 A1 (MITSUBISHI GAS CHEMICAL COMPANY, INC.) 13 October 2022 (2022-10-13) entire text, all drawings | 1-5 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **18 September 2024** | **01 October 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

INTERNATIONAL SEARCH REPORT
Information on patent family members

International application No.

**PCT/JP2024/025849**

| Patent document cited in search report | | | Publication date (day/month/year) | Patent family member(s) | Publication date (day/month/year) |
|---|---|---|---|---|---|
| JP | 2022-139139 | A | 26 September 2022 | (Family: none) | |
| WO | 2017/155119 | A1 | 14 September 2017 | US 2019/0074541 A1 entire text, all drawings | |
| WO | 2022/215520 | A1 | 13 October 2022 | EP 4321485 A1 entire text, all drawings | |

**REFERENCES CITED IN THE DESCRIPTION**

**Patent documents cited in the description**

- JP 2022139139 A

- JP 2015069696 A

**Non-patent literature cited in the description**

- **MISAE OTOYAMA** ; **KENTARO KURATANI** ; **HIRONORI KOBAYASHI**. A systematic study on structure, ionic conductivity, and air-stability of xLi4SnS4·(1-x)Li3PS4 solid electrolytes. *Ceramics International*, 2021, vol. 47, 28377-28383